(19) Europäisches Patentamt
European Patent Office
Office européen des brevets

(11) Veröffentlichungsnummer: **0 001 263**
**A1**

# EUROPÄISCHE PATENTANMELDUNG

(21) Anmeldenummer: 78100897.4

(22) Anmeldetag: 15.09.78

(51) Int. Cl.²: **C 07 F 7/08**

(30) Priorität: **15.09.77 DE 2741624**

(43) Veröffentlichungstag der Anmeldung:
**04.04.79 Patentblatt 79/7**

(84) Benannte Vertragsstaaten:
**BE DE FR GB NL**

(71) Anmelder: **WACKER-CHEMIE GMBH
Prinzregentenstrasse 22
D-8000 München 22(DE)**

(72) Erfinder: **Frey, Volker, Dr.
Asternweg 7 a
D-8263 Burghausen(DE)**

(72) Erfinder: **Müller, Horst, Dr.
Goethestrasse 21
D-8261 Emmerting(DE)**

(72) Erfinder: **Riedle, Rudolf, Dr.
Lindenweg 29
D-8263 Burghausen(DE)**

(54) **Verfahren zum Herstellen von Disiloxanen.**

(57) Erfindungsgemäß werden Disiloxane der allgemeinen Formel $(CH_2=CHR_2Si)_2O$, worin R gleiche oder verschiedene, einwertige Kohlenwasserstoffreste bedeutet, durch Umsetzung einer Verbindung der allgemeinen Formel $(CH_2=CHRClSi)_2O$ mit einer Grignard-Verbindung der allgemeinen Formel RMgX, wobei R jeweils die oben dafür angegebene Bedeutung hat und X Chlor, Brom oder Jod bedeutet, hergestellt.

EP 0 001 263 A1

- 1 -

W A C K E R - C H E M I E      München, den 7.9.1977
G M B H                LC-PAT/Dr.Ru/m

Wa 7711

## Verfahren zum Herstellen von Disiloxanen

Gegenüber dem vorbekannten Verfahren zum Herstellen der erfindungsgemäß erzeugten Disiloxane durch Hydrolyse der entsprechenden Silane, wie Dimethylvinylchlorsilan (vgl. z.B. US-PS 27 16 638, M. Cohen et al., assignors to General Electric Company, ausgegeben 30. August 1955, wobei diese Patentschrift der FR-PS 10 94 359, Anmelder: Compagnie Francaise Thomson-Houston, entspricht), hat das erfindungsgemäße Verfahren insbesondere den Vorteil, daß die dabei eingesetzten Organosiliciumverbindungen erheblich leichter zugänglich sind. Gegenüber dem vorbekannten Verfahren zum Herstellen eines erfindungsgemäß erzeugten Disiloxans, nämlich von 1,3-Divinyltetramethyldisiloxan, durch Umsetzung eines ein endständiges Chloratom aufweisenden Dimethylpolysiloxans mit mindestens 3 Si-Atomen je Molekül mit einer Grignard-Verbindung (vgl. DT-AS 11 18 199, bekanntgemacht 30. November 1961, Anmelder: Dr. E. Husemann), hat das erfindungsgemäße Verfahren z.B. den Vorteil, daß es sehr viel höhere Ausbeuten liefert.

Gegenstand der Erfindung ist ein Verfahren zum Herstellen von Disiloxanen der allgemeinen Formel $(CH_2=CHR_2Si)_2O$, worin R gleiche oder verschiedene einwertige Kohlenwasserstoffreste bedeutet, dadurch gekennzeichnet, daß eine Verbindung der allgemeinen Formel $(CH_2=CHRClSi)_2O$ mit einer Grignard-Verbindung der allgemeinen Formel RMgX, wobei R jeweils die oben dafür angegebene Bedeutung hat und X Chlor, Brom oder Jod bedeutet, umgesetzt und das gewünschte Disiloxan aus dem Reaktionsgemisch abgetrennt wird.

Beispiele für Kohlenwasserstoffreste R sind Alkylreste, wie der Methyl-, Äthyl-, n-Propyl-, Isopropyl-, n-Butyl- und sec.-Butylrest sowie Octadecylreste; Alkenylreste, wie der Vinyl- und Allylrest; cycloaliphatische gesättigte Kohlenwasserstoffreste, wie der Cyclopentyl- und Cyclohexylrest sowie Methylcyclohexylreste; cycloaliphatische Kohlenwasserstoffreste mit Kohlenstoff-Kohlenstoff-Mehrfachbindungen, wie Cyclohexenylreste; Arylreste, wie der Phenylrest sowie Xenyl- und Naphthylreste; Aralkylreste, wie der Benzyl-, beta-Phenyläthyl- und beta-Phenylpropylrest; sowie Alkarylreste, wie Tolylreste.

Die Herstellung von Verbindungen der allgemeinen Formel $(CH_2=CHRClSi)_2O$ ist bekannt. Sie kann z.B. durch Teilhydrolyse von Silanen der allgemeinen Formel $CH_2=CHRSiCl_2$, wobei R die oben dafür angegebene Formel hat, oder durch Umsetzung von Hexamethyldisiloxan mit einem Silan der vorstehend angegebenen Formel erfolgen.

Als Verbindung der allgemeinen Formel $(CH_2=CHRClSi)_2O$ wird bei dem erfindungsgemäßen Verfahren bevorzugt 1,3-Dichlor-1,3-divinyl-1,3-dimethyldisiloxan eingesetzt.

Die Herstellung von Grignard-Verbindungen ist ebenfalls und schon lange allgemein bekannt. Als Verbindungen der allgemeinen Formel RX, wobei R und X jeweils die oben dafür angegebene Bedeutung haben, aus denen durch Umsetzung mit Magnesium die erfindungsgemäß eingesetzten Grignard-Verbindungen hergestellt werden, sind Methylchlorid und Chlorbenzol bevorzugt. Vorzugsweise wird erfindungsgemäß eingesetzte Grignard-Verbindung in Tetrahydrofuran, das vorzugsweise im Überschuß über die zur Komplexbildung mit der Grignard-Verbindung benötigte Menge eingesetzt wird, hergestellt.

Das erfindungsgemäße Verfahren kann durch die Gleichung
$(CH_2=CHRClSi)_2O+2RMgX \longrightarrow (CH_2=CHR_2Si)_2O+2MgXCl$ wiedergegeben
werden. Es werden also vorzugsweise 2 bis 2,3 Mol Grignard-
Verbindung je Mol eingesetztem Disiloxan mit Si-gebundenem
Chlor eingesetzt.

Vorzugsweise werden bei der erfindungsgemäßen Umsetzung die Reaktionsteilnehmer bewegt, z.B. durch Rühren. Zur Erleichterung
dieses Bewegens und zur Erhöhung der Ausbeute bei der Rückgewin
nung des Tetrahydrofurans wird bei dem erfindungsgemäßen Verfah
ren vorzugsweise mindestens ein gegenüber den Reaktionsteilnehmern inertes und mit Wasser nicht mischbares Lösungsmittel mit
einem Siedepunkt von mindestens 100° C bei 760 mm Hg (abs.) mit
verwendet. Beispiele für solche Lösungsmittel sind aliphatische
cycloaliphatische und aromatische Kohlenwasserstoffe mit einem
Siedepunkt von mindestens 100° C, vorzugsweise mindestens 150°
bei 760 mm Hg (abs.), wie Paraffinöl, Terpentinöl, Cymol, Tetra
hydronaphthalin, Dekahydronaphthalin und Dipenten. Das inerte
Lösungsmittel bzw. ein Gemisch aus solchen Lösungsmitteln kann
vor der Umsetzung mit dem eingesetzten Disiloxan und/oder mit
der Grignard-Verbindung vermischt werden bzw. vermischt sein
oder, wenn nur die Ausbeute des Tetrahydrofurans bei seiner
Rückgewinnung erhöht werden soll, dem erfindungsgemäß erzeugter
Reaktionsgemisch vor der Abtrennung des gewünschten Disiloxans
zugesetzt werden.

Die erfindungsgemäße Umsetzung wird vorzugsweise bei -30° C bis
80° C, insbesondere bei 20 bis 75° C, und beim Druck der umgebenden Atmosphäre, also bei 760 mm Hg (abs.) oder etwa 760 mm
Hg (abs.), durchgeführt. Falls erwünscht, können aber auch niedrigere oder höhere Temperaturen und/oder höhere oder niedrigere Drücke angewendet werden.

Die Abtrennung des gewünschten Disiloxans, also eines Disiloxa:
der allgemeinen Formel $(CH_2=CHR_2Si)_2O$, wobei R die oben dafür
angegebene Bedeutung hat, aus dem Reaktionsgemisch kann auf je de für die Abtrennung von Organosiloxanen, die durch Grignard-Synthese erzeugt wurden, aus ihrem Reaktionsgemisch herkömmliche Weise erfolgen. Vorzugsweise werden mindestens 50 Gewichtsprozent des Tetrahydrofurans, falls dieses mitverwendet wurde, vor dieser Abtrennung aus dem Reaktionsgemisch abdestilliert. Dieses Tetrahydrofuran ist wasserfrei und kann wieder bei einer Grignard-Synthese ohne weitere Reinigung eingesetzt werden.

Falls Lösungsmittel mitverwendet wurde, kann dieses nach dem Abtrennen des gewünschten Disiloxans ohne weitere Reinigung ebenfalls wieder bei einer Grignard-Synthese mitverwendet werden.

Die Ausbeuten an dem gewünschten Disiloxan sind bei dem erfindungsgemäßen Verfahren sehr hoch, nämlich 90 bis 95 % d. Th.

Beispiel

In eine Mischung aus 1000 ml Tetrahydrofuran und 97,2 g (4 Mol) Magnesium in Form von Spänen wird solange Methylchlorid geleitet, bis die Späne verschwunden sind. Zu der so erhaltenen Lösung von Methylmagnesiumchlorid werden unter Rühren bei 25 bis 75° C 400 g (1,76 Mol) 1,3-Dichlor-1,3-divinyl-1,3-dimethyldisiloxan tropfenweise gegeben. Nach Zugabe von 1000 ml Paraffinöl mit einem Siedepunkt von etwa 190° C bei 760 mm Hg (abs.) werden etwa 700 ml wasserfreies Tetrahydrofuran bis zu einer Badtemperatur von 150° C abdestilliert. Der Rückstand dieser Destillation wird mit 70 ml Wasser vermischt. Dann werden etwa 280 ml Tetrahydrofuran mit einem Wassergehalt unter 0,5 Gewichtsprozent zurückgewonnen. Nach dem Abkühlen wird der Rückstand der zweiten Destillation mit 600 ml Wasser und 100 ml 20 gewichtsprozentiger wäßriger Salzsäure vermischt, und aus der organischen Schicht werden 317 g, das heißt 94 % d. Th. 1,3-Divinyl-1,1,3,3-tetramethyldisiloxan mit einem Siedepunkt von 138° C bis 139° C und einer Reinheit von mehr als 98 Gewichtsprozent erhalten.

<u>P a t e n t a n s p r u c h</u>

Verfahren zum Herstellen von Disiloxanen der allgemeinen Formel $(CH_2=CHR_2Si)_2O$, worin R gleiche oder verschiedene, einwertige Kohlenwasserstoffreste bedeutet, d a d u r c h g e k e n n z e i c h n e t , daß eine Verbindung der allgemeinen Formel $(CH_2=CHRClSi)_2O$ mit einer Grignard-Verbindung der allgemeinen Formel RMgX, wobei R jeweils die oben dafür angegebene Bedeutung hat und X Chlor, Brom oder Jod bedeutet, umgesetzt und das gewünschte Disiloxan aus dem Reaktionsgemisch abgetrennt wird.

0001263

**Europäisches Patentamt**

# EUROPÄISCHER RECHERCHENBERICHT

Nummer der Anmeldung

EP 78 100 897.4

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| − | N. HAGIHARA et al "Handbook of organometallic Compounds" 1968, W. A. BENJAMIN New York, Amsterdam, Seite 240, Zeilen 27-33 -- | 1 |
| A | DE - A - 1 668 855 (WACKER-CHEMIE) -- | |
| A | BE - A - 552 125 (UNION CARBIDE) -- | |
| A | US - A - 3 584 027 (M UND T CHEMICALS) -- | |
| D | DE - C - 1 118 199 (E. HUSEMANN) ---- | |

**KLASSIFIKATION DER ANMELDUNG (Int.Cl.²)**

C 07 F 7-08

**RECHERCHIERTE SACHGEBIETE (Int. Cl.²)**

C 07 F 7-08

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Berlin | 19-12-1978 | KAPTEYN |